(19) 

**Europäisches Patentamt**
**European Patent Office**
**Office européen des brevets**

(11) **EP 3 966 600 B1**

(12) **EUROPEAN PATENT SPECIFICATION**

(45) Date of publication and mention of the grant of the patent:
**20.03.2024 Bulletin 2024/12**

(21) Application number: **19745742.7**

(22) Date of filing: **10.05.2019**

(51) International Patent Classification (IPC):
***G01V 11/00*** *(2006.01)*

(52) Cooperative Patent Classification (CPC):
**G01V 11/00;** G01V 2210/66

(86) International application number:
**PCT/IB2019/000582**

(87) International publication number:
**WO 2020/229864 (19.11.2020 Gazette 2020/47)**

(54) **A METHOD FOR MODELLING A FACIES LOG OF A SEDIMENTARY BASIN USING A STRATIGRAPHIC FORWARD MODELLING PROGRAM**

VERFAHREN ZUR MODELLIERUNG EINES FAZIESPROTOKOLLS EINES SEDIMENTBECKENS UNTER VERWENDUNG EINES STRATIGRAFISCHEN VORWÄRTSMODELLIERUNGSPROGRAMMS

PROCÉDÉ DE MODÉLISATION D'UNE DIAGRAPHIE DE FACIÈS D'UN BASSIN SÉDIMENTAIRE À L'AIDE D'UN PROGRAMME DE MODÉLISATION DIRECTE STRATIGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.03.2022 Bulletin 2022/11**

(73) Proprietor: **TotalEnergies OneTech**
**92400 Courbevoie (FR)**

(72) Inventors:
• **MASSONNAT, Gérard**
 **64018 PAU Cedex (FR)**
• **BASTIDE, Fanny**
 **64018 PAU Cedex (FR)**

(74) Representative: **Plasseraud IP**
**66, rue de la Chaussée d'Antin**
**75440 Paris Cedex 09 (FR)**

(56) References cited:
**US-B1- 6 246 963**

• **EDWARDS JONATHAN ET AL: "Uncertainty management in stratigraphic well correlation and stratigraphic architectures: A training-based method", COMPUTERS AND GEOSCIENCES, vol. 111, 21 October 2017 (2017-10-21), pages 1-17, XP085316578, ISSN: 0098-3004, DOI: 10.1016/J.CAGEO.2017.10.008**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The invention relates to a computer-implemented method for modelling the formation of a sedimentary basin using a stratigraphic forward modelling program, and taking into account data corresponding to wells belonging the sedimentary basin to increase the accuracy of the simulation performed by the program.

### TECHNICAL BACKGROUND

Many techniques are known to model hydrocarbon reservoirs, in order to better understand their geological structure, the properties of the rocks which make them up, and eventually in order to be able to accurately define the geometry of a hydrocarbon reservoir and evaluate its dimensions, in order to setup the best exploration and production strategy of the reservoir. US 6 246 963 B1 and EDWARDS JONATHAN ET AL: "Uncertainty management in stratigraphic well correlation and stratigraphic architectures: A training-based method" disclose computer-implemented methods for setting parameters of a stratigraphic forward modelling program for modelling the formation of a sedimentary basin. They do not disclose the steps of determining an average deposition rate of the facies over each facies log, expressed as an average thickness of deposited sedimentary elements during the period of time corresponding to each layer of sedimentary elements and determining a number of layers of deposited sedimentary elements to be simulated to model each facies log, from the average deposition rate of the facies, a number of different facies within the facies log, and the thickness of each facies layer.

Some methods are known in which a reservoir model is built, comprising a number of cells where some cells are assigned petrophysical parameters obtained from wells belonging to the reservoir to be modelled. These methods comprise an upscaling of the cells to obtain averaged values of the petrophysical parameters, and then implementing geostatistical techniques to infer values of the petrophysical parameters within the whole reservoir from the local values gathered from the wells. Some other methods are not based on experimental data. Among these methods, stratigraphic forward modelling programs are known, which are computer programs simulating the formation of a sedimentary basin by simulating the successive deposition of layers of sediments, where each layer of sediments corresponds to a determined period of time, and can thus be called a "time-layer".

Running a stratigraphic forward modelling program can help gather a better understanding of the formation of a whole sedimentary basin. However, when it comes to comparing the result of the modelling with experimental data obtained from wells belonging to the sedimentary basin, there is most of the time a great discrepancy between the two. This is mainly due to the fact that, at no time, experimental data is taken into account to check or correct the accuracy of the simulation performed by the forward modelling program.

One particular problem of correlating the simulation obtained by a forward modelling program with experimental data is associating to each time layer simulated by the program a thickness of deposited sediments, in order to establish a correspondence between a facies log corresponding to a well belonging to the basin, wherein the facies log comprises a series of facies layers of known thicknesses, and the superposition of time layers simulated by the program.

### PRESENTATION OF THE INVENTION

The invention aims at providing a solution to the problem identified above. In particular, one aim of the invention is to correlate experimental data obtained from wells belonging to a sedimentary basin, to a model of the sedimentary basin obtained by running a stratigraphic forward modelling program, whereby the program is adapted to simulate the deposition of successive layers of sediments, each layer corresponding to a determined period of time.

Accordingly, a computer-implemented method for setting parameters of a stratigraphic forward modelling program for modelling the formation of a sedimentary basin according to claim 1 is disclosed.

According to the invention, the determining step comprises:

- determining an average deposition rate of the facies over each facies log, expressed as an average thickness of deposited sedimentary elements during the period of time corresponding to each layer of sedimentary elements,
- determining a number of layers of deposited sedimentary elements to be simulated to model each facies log, from the average deposition rate of the facies, a number of different facies within the facies log, and the thickness of each facies layer.

According to the invention the method further comprises inferring, from the number of layers of deposited sedimentary elements and the overall thickness of the facies log, a thickness of each layer of sediments to me simulated for modelling the facies log.

In embodiments, inferring a thickness of each layer of sediments comprises:

- computing an average thickness of the layers of sediments as the overall thickness of the facies log divided by the number of layers of deposited sedimentary elements, and
- adjusting the thickness of each layer such that a change between two successive facies in the facies log corresponds to an interface between two successive layers.

In embodiments, each facies corresponds either to a transported facies comprising formed from transported elements, or to a locally-produced facies formed at least in part from locally produced elements, wherein the total number of layers of sedimentary elements to be simulated is the sum of a number of layers of sedimentary elements to be simulated in order to represent the locally produced facies and a number of layers of sedimentary elements to be simulated in order to represent the transported facies.

In embodiments, the number of layers to be simulated in order to represent the locally produced facies of the log comprises:

- computing a cumulative thickness of all the locally produced facies of the log,
- inferring from the cumulative thickness and the average deposition rate of the facies per layer, a minimum number of layers to represent the facies corresponding to in-place produced sediments,
- determining a number of locally produced facies changes in the log,
- determining the number of layers to be simulated in order to represent the locally produced facies as the maximum value between the minimum number of layers and the determined number facies changes plus one.

In embodiments, the number of layers to be simulated in order to represent the transported facies of the log is set as the number of transported facies changes along the log plus one.

In embodiments, the method comprises receiving facies logs corresponding to at least two wells of the sedimentary basin and identifying parts of the facies logs corresponding to a same time interval, and wherein the step of determining a number of layers of deposited sedimentary elements to be simulated to model each facies log comprises determining a number of layers of deposited sedimentary elements to be simulated to model each part of a facies log corresponding a respective time interval.

The identification of parts of the facies logs corresponding to a same time interval may comprise:

- determining environmental conditions associated to at least some of the facies of each facies log, to infer, for at least one environmental factor, an environmental factor log associated to the facies log,
- establishing correlations between facies of logs corresponding to two wells respectively, from the environmental factors logs associated to each facies log, and
- inferring the parts of the facies logs corresponding to a same time interval from the established correlations.

The determining step may further comprise:

- computing, for each time interval of each facies log, a total amount of time or a total thickness represented by the number of layers to be simulated in order to represent the part of the facies log corresponding to the time interval,
- comparing the computed total amount of time to the time interval or the computed total thickness to the thickness of the part of the facies log corresponding to the time interval, and,
- if the total amount of time or thickness exceeds respectively the time interval or the thickness of the part of the facies log corresponding to the time interval, updating one of the average production rate and the period of time corresponding to a layer of sedimentary elements.

According to another aspect, a computer program product is disclosed, comprising code instructions for implementing the method according to the above disclosure, when it is executed by a processor.

According to another aspect, a non-transitory computer readable storage medium is disclosed, having stored thereon a computer program comprising program instructions, the computer program being loadable into a processor and adapted to cause the processor to carry out, when the computer program is run by the processor, the method according to the above disclosure.

According to another aspect, a device for modelling the formation of a sedimentary basin is disclosed, the device comprising a processor configured to implement the method according to the above disclosure.

BRIEF DESCRIPTION OF THE DRAWINGS

The present invention is illustrated by way of example, and not by way of limitation, in the figures of the accompanying drawings, in which like reference numerals refer to similar elements and in which:

- Figure 1 is a flow chart describing a possible embodiment of the method according to the invention,
- Figure 2 schematically represents an example of facies log restoration,
- Figure 3 represents an example of environmental factor log associated to a facies log,
- Figure 4 represents correlation established between environmental factor logs obtained from different wells,
- Figure 5 represents an exemplary implementation of a step of determining a number of layers of sediments and a thickness of each layer of sediments to be modelled by the forward stratigraphic modelling program to correspond to factor logs obtained from respective wells,
- Figure 6 represents adjusting the thickness of each layer of sediments to be modelled by the forward stratigraphic modelling program.

- Figure 7 represents an exemplary implementation of a step of determining environmental factors associated to each layer of sediments to be modelled by the program, in the case of an environmental factor which is homogeneous over the basin at a given time.
- Figure 8 represents an exemplary implementation of a step of determining environmental factors associated to each layer of sediments to be modelled by the program, in the case of an environmental factor which is heterogeneous over the basin at a given time.
- Figure 9 represents a computing device for implementing the method according to an embodiment of the invention.

## DETAILED DESCRIPTION OF AT LEAST ONE EMBODIMENT OF THE INVENTION

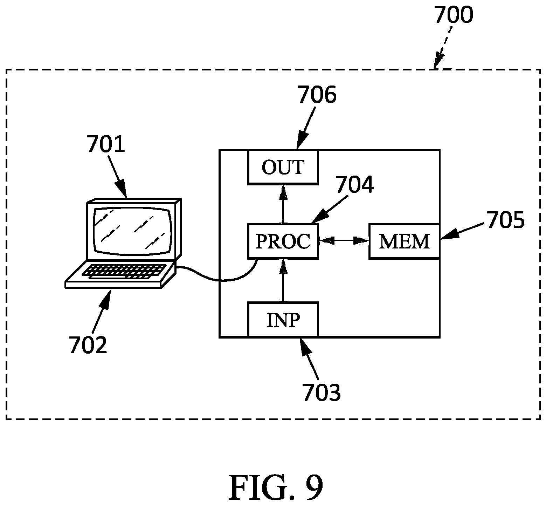

The main steps of a method for setting parameters of a stratigraphic forward modelling program, to model the formation of a sedimentary basin, will now be described. With reference to figure 9, this method is implemented by a computing device 700 which comprises a computer, this computer comprising a memory 705 to store program instructions loadable into a circuit and adapted to cause circuit 704 to carry out the steps of the present invention when the program instructions are run by the circuit 704.

The memory 705 may also store data and useful information for carrying the steps of the present invention as described above.

The circuit 704 may be for instance:

- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the invention are described within silicon, or
- a programmable electronic chip such as a FPGA chip (for « Field-Programmable Gate Array »).

This computer comprises an input interface 703 for the reception of several data used for the method described below. This computer also comprises an output interface 706 for outputting the parameters determined according to this method. To ease the interaction with the computer, a screen 701 and a keyboard 702 may be provided and connected to the computer circuit 704.

Preferably, the computing device 700 implementing the method described below is the same computing device 700 running the stratigraphic forward modelling program, and thus the memory 705 stores instructions for executing said program.

### Stratigraphic forward modelling program

The stratigraphic forward modelling program is configured to simulate the superposition of successive layers of sediments on an initial topography, wherein each layer of sediments corresponds to a determined period of time and can also be called a time-layer.

The initial topography can for instance be a gridded model of an area, comprising a plurality of cells each having a position (x,y) and a height parameter z. The area being a marine area in order to simulate deposition of sediments thereon, each cell of the topography is preferably assigned a water depth which is computed from a sea water level and the height of the cell.

The successive deposition of layers of sediments induces successive changes in the initial topography, and in particular in the height parameter and the water depth associated to each cell.

Preferably, the stratigraphic forward modelling program is also configured to simulate subsidence on the topography, at the end of each simulation of a time layer, the subsidence also inducing a change in the height parameters assigned to some cells. The amount of subsidence can vary along the topography. The stratigraphic forward modelling program may also be configured to simulate eustatism over the topography, which is a variation of the sea level.

The stratigraphic forward modelling program can be parameterized to set, before launching a simulation, the period of time corresponding to each time layer, and the overall period of time to be simulated using a superposition of time layers. Furthermore, the setting parameters comprise at least one type of sediments supply process among a plurality of supply processes comprising for instance:

- Rivers,
- Travertine sources,
- Volcanoes,
- In-situ production of carbonates,
- Remobilization of carbonates or travertine (for instance if a piece thereof is broken by a current, it can be transported and deposited again),
- Etc.

Moreover, each supply process may further be parameterized to set a production model comprising a maximum production rate of sediments of each supply process, which is expressed as a maximum thickness of deposited sedimentary elements per time layer, i.e. for the period of time corresponding to a time layer. The actual production rate per time layer may optionally be reduced by a coefficient set by the user at each time layer in order to take into account phenomena that may reduce the amount of supplied elements.

The production model corresponding to a supply process also comprises the definition of at least one element which is supplied by the process, and, if there are at least two elements supplied by the process, the respective proportions of the elements. In all that follows, an element is a type of sediment simulated by the program. The elements which can be supplied in the supply process simulated by the program are for instance chosen among the following list:

- Sandstone,
- Travertine,
- Sand
- Basalt
- Calcareous
- Shale
- Silt,
- Debris of shells
- Corals, etc.

The stratigraphic forward modelling program is also preferably configured to allow parameterizing the location of some sources of elements such as rivers, volcanoes, travertine sources, etc.

Before launching a simulation, the stratigraphic forward modelling program also allows parameterizing a number of environmental factors which have an impact on the deposition of sediments. This parametrization can comprise assigning a fixed value or a fixed range of values to an environmental factor for all the time layers to be modelled to simulate the overall period of time. Alternatively, a value or a range of value may be assigned to an environmental factor for only one time layer, and can be changed between one time layer and the next.

Preferably, the environmental factors that can be parameterized comprise at least one parameter chosen among the following list:

- Salinity of sea water,
- Amount of oxygen in water,
- Water Temperature,
- pH level,
- Water current velocity,
- Volcano activity,
- Spring activity
- River activity,
- Water accommodation, which is the variation of the water level between one time layer and the next, computed from the variation in sea level induced by eustatism and the variation of the ground level induced by subsidence.

Additional factors that can be parameterized may also be set by the user. Regarding volcano, spring and river activities, these parameters allow modulating the production model defined for each of these supply processes, for at least a given time layer.

Regarding water current velocity, the stratigraphic forward modelling program may also be configured to allow simulating at least one water current, and defining or computing the location at which occurs said water current, and the velocity of said water current in each cell where it occurs.

*Method for setting parameters of the stratigraphic forward modelling program*

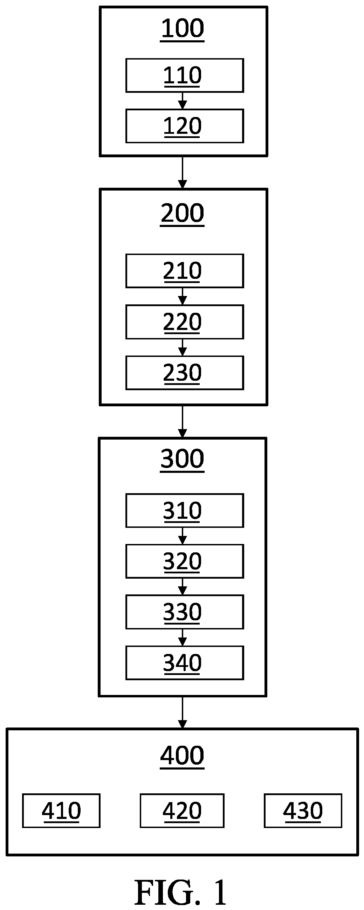

With reference to figure 1, the method according the invention uses experimental data obtained from wells belonging to the sedimentary basin to be modelled using the stratigraphic forward modelling program, to increase the accuracy of the simulation.

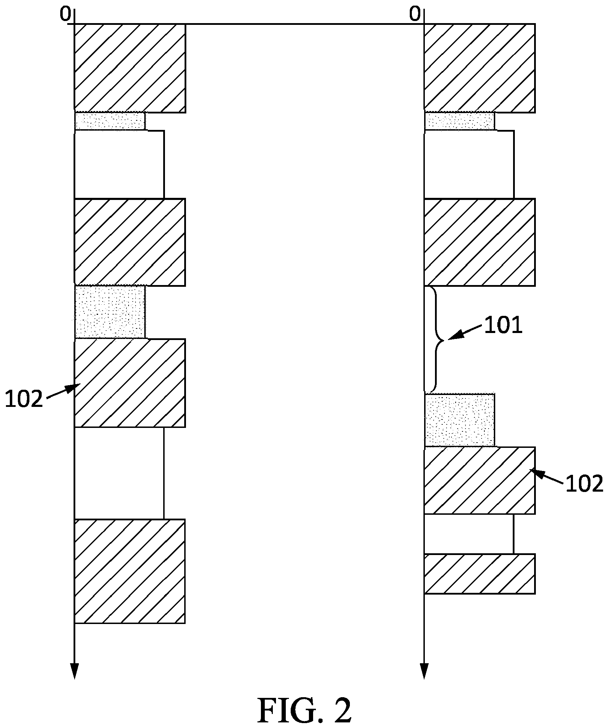

It thus comprises a step 100 of receiving a facies log corresponding to an initial state of at least one well belonging to the sedimentary basin, wherein the facies log comprises a succession of layers of different facies, each layer extending from a respective depth with a respective thickness, as shown for instance in figure 2 where facies logs are represented along a depth axis.

In all that follows, a facies is a type of sediment, reflecting a particular process or environment for sedimentation. Therefore a facies is associated to at least one or a plurality of elements, and are often also associated to at least one environmental factor, such as a maximum slope value of the ground, a minimum or maximum velocity value or marine current, a range of temperatures values, etc.

In an embodiment of the method, only one facies log corresponding to one well is received. In other embodiments, a plurality of facies log corresponding to each of a plurality of respective wells, each belonging to the sedimentary basin to be modelled, are received.

*Well restoration*

In an embodiment, step 100 comprises the reception 110 of a facies log corresponding to a current state of the well, and a step 120 of so-called well restoration, which comprises processing the log corresponding to the current state of the well to infer a restored log corresponding to the initial state of the well.

In particular, this step can comprise taking into the effects of erosion, compaction, or the occurrence of a fault between an initial state of the well and its current state.

Figure 2 shows on the left-hand side of the figure a facies log corresponding to a current state of a well, and on a right-hand side of the figure a facies log corresponding to an initial state of the same well.

As can be seen on this figure, well restoration can comprise insertion of additional facies layers or empty segments in the facies log (101) to take into account lithological layers that have been eroded. It can also comprise modifying the thickness of a facies layer (for instance layer 102), to take into account compression, partial erosion, or a fault which has changed the apparent thickness of a facies layer. It can also comprise deleting a facies layer from the layer corresponding to the current state of the well, also for taking into account a fault. According to an embodiment, step 120 of well restoration may be performed according to the method described in WO 2014/023910.

In another embodiment, the well restoration may have been primarily performed by another computing device and step 100 comprises receiving from this other computing device, or loading from a memory, the facies log corresponding to the initial state of the well.

*Environmental factors logs*

Back to figure 1, the method then comprises a step 200 of determining environmental conditions associated to at least some of the facies of each facies log to infer, for at least one environmental factor, an environmental factor log associated to the restored facies log.

Step 200 comprises a substep 210 of loading a correspondence table between each of a plurality of facies types and elements and associated environmental conditions. This correspondence table is preferably pre-established and stored in the memory 705.

Then for each facies layer of a facies log, step 200 comprises inferring 220 from the correspondence table one or more elements which are present in the facies, and environmental conditions which are necessary for the facies to appear. These environmental conditions can be expressed as maximum and/or minimum values of at least one environmental factor.

An environmental factor log may thus be formed from the environmental conditions inferred from the succession of facies in the facies log, each environmental factor log corresponding to a single environmental factor.

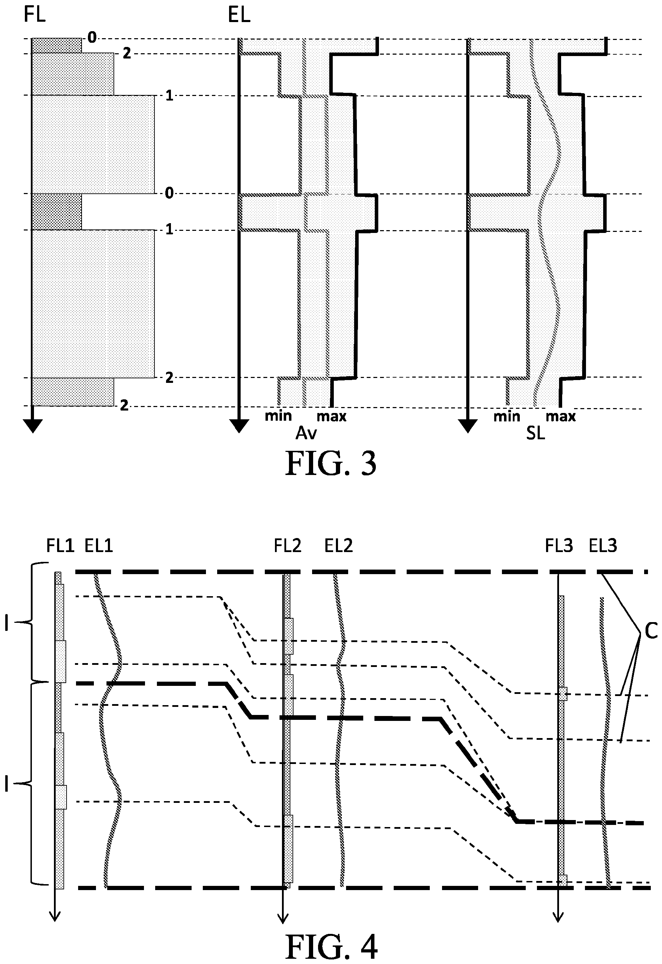

As shown for instance in figure 3, the environmental factor log, denoted EL, is thus a representation, according to depth, of the possible values of an environmental factor, where each value or range of values corresponds to a facies layer of the facies log, denoted FL, and therefore extends from the same depth and along the same thickness as the corresponding facies layer.

Therefore, a plurality of environmental factor logs may be generated from one facies log, comprising for instance a temperature log, water current velocity log, an accommodation log, etc.

According to a possible embodiment, the values of an environmental factor inferred at step 220 for at least one facies of the facies log comprise a minimum and a maximum values. In this case, step 200 may comprise a further step 230 of computing, for each facies layer for which minimum and maximum values have been inferred, an average value of the environmental factor. The average value is shown as Av in figure 3, which represents an environmental factor log EL obtained from a facies log FL.

Then optionally step 230 can comprise smoothing the values obtained for the environmental factor along the environmental factor log, to obtain a continuum of values over all the depth of the environmental factor log. The right-hand side of figure 3 shows the smoothed values SL obtained for the environmental factor log.

According to a possible embodiment, in the case where the reception step 100 comprises the reception of at least two facies logs corresponding to respective wells belonging to the sedimentary basin to be modelled, step 200 may further comprise establishing at least one correlation between the facies logs, the correlation being inferred from the environmental factor log inferred from each facies log. A correlation between two facies logs is a temporal correlation, i.e. it is an indication that two facies layers belonging respectively to two facies logs correspond to a same era, even though for example the facies layers may not have the same thickness or may not be preceded or followed from the same type of facies. According to another example, a correlation can also be an indication that a change between two facies layers of a facies log occurred at the same time that a change between two facies layers of the other facies log.

A correlation can also be inferred from a particular event that has occurred at the same time in two wells, such as for instance a fault, a volcanic eruption, a seismic marker, etc.

In figure 4 is shown an example of correlations C established between three facies logs FL1, FL2, FL3 corresponding to three respective wells. An environmental factor log EL1, EL2, EL3 corresponding to the same environmental factor has been generated for each facies log, and from the environmental factor logs the correlations C are established. They can be established manually by a user, or automatically based on a defined criterion, such as a local extremum of the environmental factor log.

According to this embodiment, the establishment of correlations from environmental factors allows determining time intervals I which are common for the at least two processed facies logs, said time intervals corresponding to parts of the facies log formed during this time interval. The time intervals can be inferred from the correlations between two logs, for instance by identifying two events which appear in two facies logs, and defining a time interval as the time elapsed between the two events. Each facies log may then be divided in a number of intervals, each comprising at least one facies, wherein each interval corresponds to a time interval established between correlations. Two intervals are defined in figure 4, which are common for all three facies logs.

*Grid resolution*

Back to figure 1, the method then comprises a step 300 of determining, for each facies log corresponding to an initial state of a well, a number of time layers, or layers of sediments, to be simulated by the stratigraphic forward modelling program for modelling the facies log, and a thickness of each layer of sediments, in order for the succession of layers of sediments to correspond to each facies log. Thus, each facies layer of the facies log is modelled by at least one corresponding layer of sediments simulated by the stratigraphic forward modelling program, and a relationship is established between the duration of a time layer (i.e. the period of time represented by one layer of sediments of the program) and the thickness of each facies layer.

A first substep 310 of step 300 comprises determining, for each facies of each facies log, an average deposition rate of the facies per time layer, and a maximum deposition rate of the facies per time layer, from the elements constituting the facies. As indicated above, each element of the stratigraphic forward modeling program is associated to a maximum production rate per time layer which has been set initially with the other parameters of the program, as well as the period of time corresponding to each time layer.

Hence, substep 310 comprises determining, among the elements constituting each facies, those that are transported and those that are produced locally and the relative proportions of those elements.

The average deposition rate and maximum deposition rate of the facies per time layer may then be computed from the maximum production rate of the elements produced locally $PE_p$, and the proportion of the locally produced elements within the facies. For instance, the maximum deposition rate may be the maximum production rate of the elements produced locally multiplied by the proportion of said elements within the facies, and the average deposition rate may be half the maximum deposition rate.

According to one example, a facies F1 comprises one transported element $E_t$ and one locally produced element $E_p$ in the following proportions:

$$F1 = 0.4E_p + 0.6E_t$$

Then the maximum deposition rate can be computed as: $P_M = PE_p*0.4$ And the average deposition rate can be computed as

$$P_m = (PEp/2)*0.4.$$

If the facies comprises more than one component produced locally, then the average and maximum deposition rates may be computed from the maximum production rate of each element and the relative proportions of the elements within the facies.

According to another example, a facies F2 comprises one transported element Et and two locally produced elements $E_{pa}$, $E_{pb}$, in the following proportions :

$$F2 = 0.3E_{pa} + 0.3E_{pb} + 0.4E_t$$

Then the maximum deposition rate can be computed as:

$$P_M = PE_{pa}*0.3 + PE_{pb}*0.3$$

where PEpa is the maximum production rate of element $E_{pa}$ and PEpb is the maximum production rate of element $E_{pb}$.

The average deposition rate can be computed as:

$$P_m = (PE_{pa}*0.3 + PE_{pb}*0.3)/2$$

Then, average and maximum deposition rates over the whole facies log may be computed from respectively the average and maximum deposition rates of the facies composing the log, weighted by the thickness of each facies within the log.

For instance, the average deposition rate of the log may be the average of the average deposition rates of the facies composing the log, weighted by the thicknesses of the facies composing the log.

The maximum deposition rate of the log may be the minimum of the maximum deposition rates of the facies composing the log.

Once a maximum and an average deposition rates have been determined for each facies, step 300 comprises determining 320 a number of layers of sediments to be simulated in order to model the facies log. This number of layers of sediments is determined based on :

- the average deposition rate of each facies,
- the number of locally produced facies in the log, wherein a facies is considered locally produced if it comprises at least 10% of locally produced element,
- The number of transported facies in the log, and
- the thickness of each facies layer.

The number of layers of sediments is determined differently for facies which are locally produced and transported facies.

Regarding locally produced facies, the number of layers of sediments is computed from the total thickness of the facies layers of the locally produced type within the log, divided by the average deposition rate of the facies along the log. Additionally, the computed number of layers of sediments must be at least equal to the number of facies changes along the log + 1.

According to an example, if the average deposition rate of the facies along the log is 10 meters per time layer, and the facies log comprises 2 locally produced facies changes with a cumulative thickness of 100 meters, then the number of layers of sediments to represent these facies is 10.

If the facies log comprises 5 different locally produced facies (i.e. 4 facies changes) with a cumulative thickness of 100 meters, then the number of layers of sediments to represent these facies is 5.

Regarding transported facies, the number of layers of sediments is computed from the number of transported facies changes along the log, and is equal to this number + 1, independtly from the thickness of each facies layer.

According to an example, if the facies log comprises 4 different transported facies (i.e. 3 facies changes), the number of layers of sediments to represent these facies is 4.

Last, the total number of layers of sediments to be simulated to model the facies log is the sum of the number of layers of sediments to be simulated to model the transported facies and to model the locally produced facies.

According to an embodiment, if common time intervals have been defined for the facies log, then substep 320 of determining a number of layers of sediments to represent each facies log may be performed separately for each interval of each facies log, based on the number of locally produced facies and of transported facies of each interval.

A total number of layers of sediments to represent each interval is computed by summing the number of layers of sediments required to represent the transported and locally produced facies of the interval.

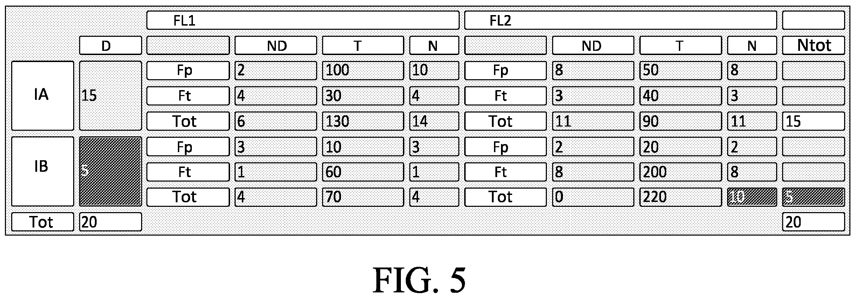

This is shown for instance in figure 5, which represents an example of graphical interface for displaying the method, in which for each facies log FL1, FL2, the duration D of each interval IA, IB is represented, as well as the total duration of the facies logs Tot.

For each facies log, and each interval I, are shown:

- the number ND of different facies of the type locally produced facies Fp and transported facies Ft,
- cumulative thickness T of the facies of each type within each interval,
- the computed number N of layers of sediments to represent each type of facies,
- The total values of ND, T and N for each interval.

In the example shown in figure 5, the period of time corresponding to one time layer is 1 million years, the average deposition thickness per layer of the logs is 10 meters per layer, and the maximum deposition thickness per layer of the logs is 50 meters.

Once a total number of layers of sediments have been determined to represent each facies log, the maximum value over all the facies logs is selected as the number of layers of sediments to be modelled by the stratigraphic forward modelling program to represent all the facies logs.

In figure 5, this value appears in the right-hand column showing the number Ntot of layers of sediments to be modelled in order to represent all facies logs.

Step 300 then comprises a substep 330 of checking the consistency of the obtained total number of layers of sediments to be modelled.

In an embodiment, if the total number of layers of sediments to be modelled multiplied by the average deposition rate of the facies along the log exceeds the overall thickness of the facies log, then the method comprises alerting the user in order to reduce either the period of time corresponding to a layer of sediments, and/or the production model of the elements to reduce the amount of deposited sediments per time layer.

In an alternative embodiment which is shown in figure 5, the comparison in thickness is replaced by a comparison in duration, wherein an alert is launched if the total number of layers of sediments to be modelled multiplied by the period of time corresponding to a layer of sediments exceeds the total period of time represented by a facies log.

If the facies logs have been decomposed in intervals, then this step 330 can be performed for each interval, i.e. the total number of layers to be modelled to represent one interval, multiplied by the average deposition rate of the facies along the log or the period of time represented by one layer of sediments, is compared respectively to the thickness of the interval or the duration of an interval.

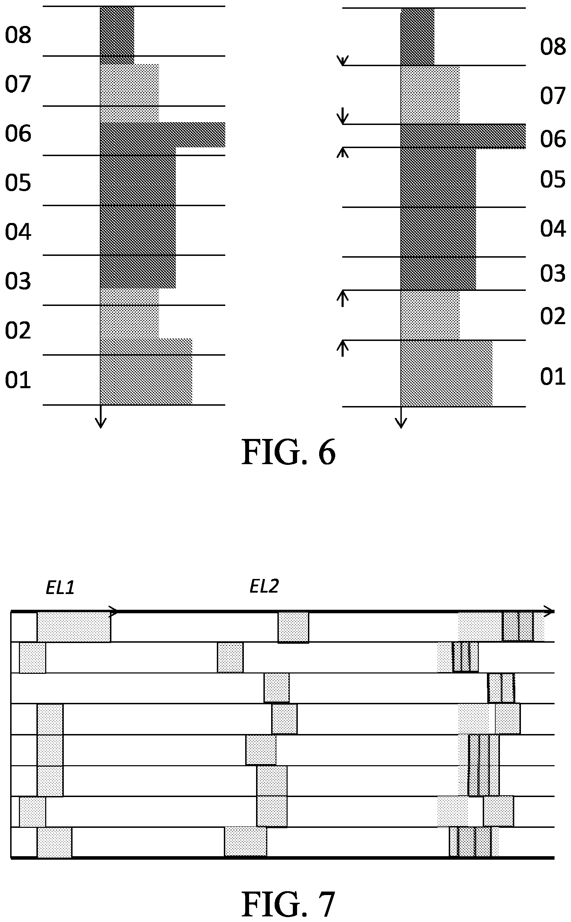

Step 300 then comprises a substep 340 of determining a thickness of each layer of sediments to be simulated. This substep is preferably performed by determining an average thickness of each layer of sediments, which is equal to the total thickness of the facies log(s) divided by the total number of layers of sediments to represent the log(s). Preferably, with reference to figure 6, substep 340 further comprises adjusting the thickness of each layer of sediments so that a change between two successive facies in a facies log corresponds to an interface between two successive layers. The left-hand graph of figure 6 represents the thickness of each layer of sediments (from 1 to 8) to be simulated by the program, superposed on the actual facies layers of the facies log, and the right-hand graph of figure 6 represents the thickness of each layer of sediments once adjusted to fit the corresponding thickness of the facies layers.

Thus, a thickness is assigned to each layer of sediments to be modelled by the program, which ensures that each layer of sediments will correspond to a facies layer of a facies log. The thickness of each layer of sediments is preferably adjusted locally for each facies log, which implies that the thickness of a layer of sediments can vary along the model.

*Environmental constraints*

Back to figure 1, the method then comprises a step 400 of determining, from the environmental factor logs associated to each facies log, environmental parameters associated to the layers of sediments to be simulated by the stratigraphic forward modelling program, in order that the superposition of the simulated layers of sediments corresponds to the facies logs.

If there is only one facies log received at step 100, the environmental parameters associated to the layers of sediments to be simulated to represent the facies log are inferred directly from the values of the environmental factor log associated to the facies log.

However if at least two facies logs have been received at step 100 and processed in the following steps of the method, then step 400 is implemented differently according to the type of environmental factor which is considered. In particular, among the environmental factors listed above, some factors are homogeneous over the sedimentary basin to be modelled during the period of time corresponding to one layer of sediments modelled by the program, while other are heterogeneous. Factors such as water temperature, salinity, pH, etc. are homogeneous over the sedimentary basin, while other factors such as water current velocity or water accommodation are heterogeneous over the sedimentary basin.

The implementation of step 400 requires that correlations have been established at step 200 between environmental factors associated respectively to each facies log, and that parts of the various facies logs corresponding to at least one common time interval have been identified.

In an embodiment, step 400 comprises a substep 410 of inferring, from the environmental factor logs corresponding to at least a homogeneous environmental factor, a value of said environmental factor for the simulation of at least one layer of sediments by the stratigraphic forward modeling program.

This value is inferred from the value of the environmental factor logs established for at least two facies logs, and for parts of the facies logs corresponding to a same period of time (i.e. which can be modelled with a common layer of sediments simulated by the program).

In particular, each environmental factor log preferably comprises, for each facies of a facies log, a range of values of the environmental factor. Step 410 then comprises identifying at least one part of each facies log that corresponds to a same period of time, and which can comprise one or more facies layers, and inferring at least one value or a range of values at the intersection of the range of values of the environmental factor associated to each facies log for the same period of time, as shown schematically in figure 7, representing the environmental logs EL1, EL2 obtained for two facies logs, with values of the environmental logs assigned to parts of each log corresponding to the same time interval. On the right hand side are shown the ranges of values at the intersection of the ranges of values available for each environmental log, and an average value of each range.

In some cases, there may be no intersection between the values of the environmental factor associated to one facies log and the values associated to another facies log for the same period of time. In that case, a reference facies log has preferably been defined before the implementation of the method, and the values of the environmental factor inferred for the layer of sediments to be simulated is the range of values of the reference log.

In the case where there are more than two facies logs, the values which are selected for the layer of sediments to be simulated can be values at the intersection of a majority of facies logs, or values of an environmental factor log associated to a reference facies log.

Regarding heterogeneous environmental factors, which are either water accommodation or water current velocity, they are processed differently.

According to an embodiment, step 400 comprises a substep 420 of inferring, from water current velocity logs associated to each facies log, values of water current velocity for the forward stratigraphic modelling program.

This substep 420 first comprises inferring 421, from each transported facies of each facies log, a corresponding maximum water current velocity at water bottom, which is the highest velocity at which elements of the transported facies can be deposited. The water currents which are simulated by the program must therefore have a velocity at water bottom lower than said maximum water current velocity in order for the simulation to comply with the facies logs.

Then, the forward stratigraphic modelling program is run, and in particular the program simulates water current and outputs a simulated value of water current velocity at water bottom at the location the well from which the facies log has been obtained, is given by the program. A ratio between the maximum value obtained at step 420 and the simulated value obtained from the simulation program is computed at substep 422. This ratio corresponds to an error of the simulation program

An extrapolation of this error is then computed, for instance by 2D Kriging based on an isotropic variogram, to generate a map of the error of the simulation program over the sedimentary basin to be modelled.

Then during a substep 423, the value of the water current velocity at water bottom simulated by the program in each point of the model of the sedimentary basin is multiplied by the error at the same point of the sedimentary basin to obtain a corrected value of the water current velocity at water bottom.

According to an embodiment, step 400 comprises a substep 430 of inferring, from environmental factor logs associated to each facies log, values of water accommodation for the forward stratigraphic modelling program.

According to a first implementation, the environmental factor log associated to each facies log comprises a water depth log, comprising a value or a range of water depths associated to at least some facies of each facies log. A value or a range of water depths can be inferred from the type of element composing the facies, because some elements can only be deposited at some specific water depths.

In the description that follows, parts of facies logs from which water depths and accommodation values are extracted and corresponding to the same time interval will be called facies layers for simplicity, but said parts can comprise only part of a whole facies layer for a given facies log, depending on the correlations that have been made between the facies logs.

If the water depth log comprises a range of water depths for each facies layer of the facies log, an average water depth value is computed from this range.

Then, a water accommodation value Acc is inferred from a value of the water depth associated to each facies layer and the thickness of each facies layer by the following formula:

$$Acc = WD2\text{-}WD1 + eF1$$

Where $eF1$ is the thickness of a facies layer, $WD1$ is the water depth corresponding to the facies layer, and $WD2$ is the water depth of the next facies layer in time, which corresponds to the facies layer located immediately above the first one in the facies log.

Accomodation values are thus obtained at each facies log for each facies layer, and can then be used in the simulation of layers of sediments corresponding to the facies layers of the various facies logs corresponding to the same period of time.

If a single value of water accommodation is desired for each layer of sediments to be modelled, which implies that the same value of water accommodation applies to each facies log, then an average value of water accommodation can be computed from the values of the facies layers of the facies logs corresponding to period of time represented by the layer of sediments to be modelled.

Alternatively, if the water depth log comprises a range of water depths for each facies layer of the facies log, a range of water accommodation can be computed from the ranges of water depths. Then a value or a range of values of water accommodation can be inferred from the ranges of water accommodation available for the various facies logs the same way as exposed in step 410 above.

If there is a difference between the water accommodation associated to a time layer and the value or range of water accommodation at a facies log, then this difference can be set to correspond to local subsidence at the well corresponding to the facies log, and be parameterized as such for the simulation of the time layer.

According to a second implementation, a water depth log is assigned to each facies log, comprising for each facies layer a range of water depths. The initial topography set in the stratigraphic forward simulation program provides a first value of water depth before the deposition of elements corresponding to the first facies layer of each facies log (or the part of each facies log corresponding to the first time layer to be simulated).

A range of water accommodation is then computed, for each facies log, from the range of water depths corresponding to the second facies layer of the log, the thickness of the first facies layer, and the water depth of the first facies layer provided by initial topography, according to the following formulae:

$$Accmin=WD2min\text{-}WD1+e1$$

$$Accmax=WD2max\text{-}WD1+e1$$

Where Accmin and Accmax are minimum and maximum accommodation values, $e1$ is the thickness of the first facies layer, $WD1$ is the water depth of the first facies layer provided by the initial topography of the model, and $WD2min$ and $WD2max$ are the minimum and maximum values of the water depth corresponding to the second facies layer.

From the accommodation ranges available for each facies log, a value common to all facies logs is inferred. Preferably, this value is an average value of a value range common to the accommodation ranges available for each facies log. If no common value exists, a value is chosen which minimizes the difference between said value and each accommodation range computed for a facies log. This difference is then set as a level of subsidence to be modelled in the simulation program.

Then for the next facies layer a range of accommodation values is computed the same way as before from the common accommodation value obtained for the preceding facies layer, the thickness of the preceding facies layer and the range of water depths assigned to the next layer, and so on until accommodation values are computed for the whole facies log.

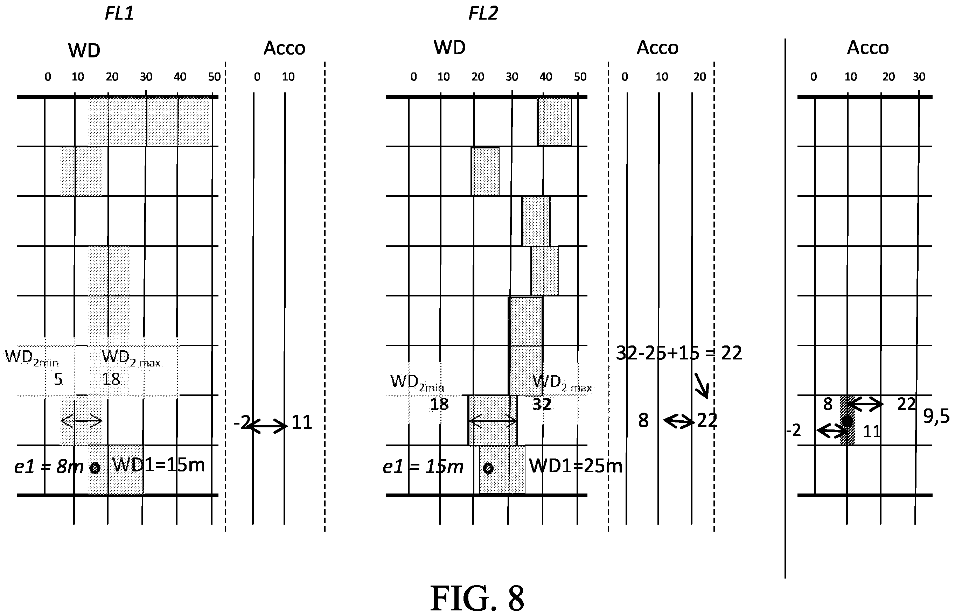

An example of this implementation is shown in figure 8, showing two water depths (WD) logs of two respective facies logs (FL). The water depths values are assigned to each of a plurality of parts of the facies logs corresponding to the same period of time.

On the right hand side of each water depth log is indicated the range of accommodation values (Acco) computed as described above.

On the right hand side of figure 8 is shown the value range at the intersection of the accommodation ranges computed for each log, and the accommodation value chosen among this range for the considered facies layer, which will be used for the next facies layer.

The above described method thus allows establishing a correspondence between the simulation of the modelling of a sedimentary basin and actual data obtained from wells belonging to the sedimentary basin. The stratigraphic forward modelling program can thus have increased precision.

**Claims**

**1.** A computer-implemented method for setting parameters of a stratigraphic forward modelling program for modelling the formation of a sedimentary basin, wherein the stratigraphic forward modelling program is configured to simulate the superposition of successive layers of sediments, each layer of sediments corresponding to a determined period of time, the method comprising steps of:

- receiving (100) a facies log corresponding to an initial state of at least one well belonging to the sedimentary basin, wherein the facies log comprises a succession of layers of different facies wherein each layer extends from a respective depth with a respective thickness,
- determining (300) from the facies log a number of layers of sediments and a thickness of each layer of sediments to be simulated by the stratigraphic forward modelling program for modelling said facies log, comprising:

○ determining (310), from the facies log, an average deposition rate of each facies of the facies log, expressed as an average thickness of deposited sedimentary elements during the period of time corresponding to each layer of sediments, and
○ determining (320) a number of layers of sediments to be simulated by the stratigraphic forward modelling program for modelling the facies log, from the average deposition rate of the facies, a number of different facies within the facies log, and a thickness of each facies layer, and
○ determining (340) a thickness of each layer of sediments from the number of layers of deposited sedimentary elements and from the overall thickness of the facies log.

2. The computer-implemented method according to claim 1, wherein inferring a thickness (340) of each layer of sediments comprises :

- computing an average thickness of the layers of sediments as the overall thickness of the facies log divided by the number of layers of deposited sedimentary elements, and
- adjusting the thickness of each layer such that a change between two successive facies in the facies log corresponds to an interface between two successive layers.

3. The computer-implemented method according to any of claims 1 or 2, each facies corresponds either to a transported facies comprising formed from transported elements, or to a locally-produced facies formed at least in part from locally produced elements, wherein the total number of layers of sedimentary elements to be simulated is the sum of a number of layers of sedimentary elements to be simulated in order to represent the locally produced facies and a number of layers of sedimentary elements to be simulated in order to represent the transported facies.

4. The computer-implemented method according to claim 3, the number of layers to be simulated in order to represent the locally produced facies of the log comprises:

- computing a cumulative thickness of all the locally produced facies of the log,
- inferring from the cumulative thickness and the average deposition rate of the facies per layer, a minimum number of layers to represent the facies corresponding to locally produced sediments,
- determining a number of locally produced facies changes along the log,
- determining the number of layers to be simulated in order to represent the locally produced facies as the maximum value between the minimum number of layers and the determined number of facies changes plus one.

5. The computer-implemented method according to any of claims 3 or 4, wherein the number of layers to be simulated in order to represent the transported facies of the facies log is set as the number of transported facies changes along the facies log plus one.

6. The computer-implemented method according to any of the preceding claims, comprising receiving facies logs corresponding to at least two wells of the sedimentary basin and identifying parts of the facies logs corresponding to a same time interval, and wherein the step of determining a number of layers of deposited sedimentary elements to be simulated to model each facies log comprises determining a number of layers of deposited sedimentary elements to be simulated to model each part of a facies log corresponding a respective time interval.

7. The computer-implemented method according to claim 6, wherein the identification of parts of the facies logs corresponding to a same time interval comprises :

- determining environmental conditions associated to at least some of the facies of each facies log, to infer, for at least one environmental factor, an environmental factor log associated to the facies log,
- establishing correlations between facies of logs corresponding to two wells respectively, from the environmental factors logs associated to each facies log, and

- inferring the parts of the facies logs corresponding to a same time interval from the established correlations.

8. The computer-implemented method according to claim 6 or 7, wherein the step of determining a number of layers of deposited sedimentary elements to model each facies log further comprises :

- computing, for each time interval of each facies log, a total amount of time or a total thickness represented by the number of layers to be simulated in order to represent the part of the facies log corresponding to the time interval,
- comparing the computed total amount of time to the time interval or the computed total thickness to the thickness of the part of the facies log corresponding to the time interval, and,
- if the total amount of time or thickness exceeds respectively the time interval or the thickness of the part of the facies log corresponding to the time interval, updating one of the average production rate and the period of time corresponding to a layer of sedimentary elements.

9. A computer program product, comprising code instructions for implementing the method according to any of the preceding claims, when it is executed by a processor.

10. A non-transitory computer readable storage medium, having stored thereon a computer program comprising program instructions, the computer program being loadable into a processor and adapted to cause the processor to carry out, when the computer program is run by the processor, the method according to any of claims 1 to 8.

11. A device for modelling the formation of a sedimentary basin, the device comprising a computer configured to implement the method according to any of claims 1 to 8.

**Patentansprüche**

1. Computerimplementiertes Verfahren zum Setzen von Parametern eines stratigraphischen Vorwärtsmodellierungsprogramms zum Modellieren der Formation eines Sedimentbeckens, wobei das stratigraphische Vorwärtsmodellierungsprogramm konfiguriert ist, um die Überlagerung aufeinanderfolgender Sedimentschichten zu simulieren, wobei jede Sedimentschicht einer bestimmten Zeitperiode entspricht, wobei das Verfahren die Schritte aufweist:

- Empfangen (100) eines Facies-Protokolls, das einem Anfangszustand zumindest einer Bohrung entspricht, die zu dem Sedimentbecken gehört, wobei das Facies-Protokoll eine Aufeinanderfolge von Schichten unterschiedlicher Facies aufweist, wobei sich jede Schicht von einer jeweiligen Tiefe mit einer jeweiligen Dicke erstreckt;
- Bestimmen (300), aus dem Facies-Protokoll, einer Anzahl von Sedimentschichten und einer Dicke jeder Sedimentschicht zur Simulation durch das stratigraphische Vorwärtsmodellierungsprogramm zum Modellieren des Facies-Protokolls, umfassend:

o Bestimmen (310), aus dem Facies-Protokoll, einer durchschnittlichen Ablagerungsrate jeder Facies des Facies-Protokolls, ausgedrückt als durchschnittliche Dicke von abgelagerten Sedimentelementen während der jeder Sedimentschicht entsprechenden Zeitperiode, und
∘ Bestimmen (320), einer Anzahl von Sedimentschichten zur Simulation durch das stratigraphische Vorwärtsmodellierungsprogramm zum Modellieren des Facies-Protokolls aus der durchschnittlichen Ablagerungsrate der Facies, einer Anzahl unterschiedlicher Facies innerhalb des Facies-Protokolls und einer Dicke jeder Facies-Schicht, und
o Bestimmen (340) einer Dicke jeder Sedimentschicht aus der Anzahl von Schichten abgelagerter Sedimentelemente und aus der Gesamtdicke des Facies-Protokolls.

2. Das computerimplementierte Verfahren nach Anspruch 1, wobei das Herleiten einer Dicke (340) jeder Sedimentschicht aufweist:

- Berechnen einer durchschnittlichen Dicke der Sedimentschichten als Gesamtdicke des Facies-Protokolls geteilt durch die Anzahl von Schichten abgelagerter Sediment-Elemente, und
- Justieren der Dicke jeder Schicht derart, dass eine Änderung zwischen zwei aufeinanderfolgenden Facies in dem Facies-Protokoll einer Grenze zwischen zwei aufeinanderfolgenden Schichten entspricht.

3. Das computerimplementierte Verfahren nach einem der Ansprüche 1 oder 2, wobei jede Facies entweder einer transportierten Facies, die aus transportierten Elementen gebildet ist, oder einer lokal produzierten Facies, die zumindest teilweise aus lokal produzierten Elementen gebildet ist, entspricht, wobei die Gesamtzahl von zu simulierenden Sedimentelementschichten eine Summe einer Anzahl von zu simulierenden Sedimentelementschichten ist, um die lokal produzierte Facies zu repräsentieren, und einer Anzahl von zu simulierenden Sedimentelementschichten, um die transportierte Facies zu repräsentieren.

4. Das computerimplementierte Verfahren nach Anspruch 3, wobei die Anzahl von zu simulierenden Schichten, um die lokal produzierte Facies des Protokolls zu repräsentieren, aufweist:

- Berechnen einer kumulativen Dicke aller lokal produzierter Facies des Protokolls,
- Herleiten einer minimalen Anzahl von Schichten, um die lokal produzierten Sedimenten entsprechende Facies zu repräsentieren, aus der kumulativen Dicke und der durchschnittlichen Ablagerungsrate der Facies pro Schicht,
- Bestimmen einer Anzahl lokal produzierter Facies-Änderungen entlang dem Protokoll,
- Bestimmen der Anzahl von zu simulierenden Schichten, um die lokal produzierte Facies zu repräsentieren, als den Maximalwert zwischen der minimalen Anzahl von Schichten und der bestimmten Anzahl von Facies-Änderungen plus eins.

5. Das computerimplementierte Verfahren nach einem der Ansprüche 3 oder 4, wobei die Anzahl von zu simulierenden Schichten, um die transportierte Facies des Facies-Protokolls zu repräsentieren, als die Anzahl von transportierten Facies-Änderungen entlang dem Facies-Protokoll plus eins gesetzt wird.

6. Das computerimplementierte Verfahren nach einem der vorhergehenden Ansprüche, welches aufweist, Facies-Protokolle entsprechend zumindest zwei Bohrungen des Sedimentbeckens zu empfangen und einem gleichen Zeitintervall entsprechende Teile der Facies-Protokolle zu identifizieren, und wobei der Schritt des Bestimmens einer Anzahl von zu simulierenden Schichten abgelagerter Sedimentelemente zum Modellieren jedes Facies-Protokolls aufweist, eine Anzahl von zu simulierenden Schichten abgelagerter Sedimentelemente zu bestimmen, um jedes einem jeweiligen Zeitintervall entsprechende Teil eines Facies-Protokolls zu modellieren.

7. Das computerimplementierte Verfahren nach Anspruch 6, wobei das Identifizieren von dem gleichen Zeitintervall entsprechenden Teilen der Facies-Protokolle aufweist:

- Bestimmen von Umweltbedingungen, die zumindest einigen der Facies jedes Facies-Protokolls zugeordnet sind, um, für zumindest einen Umweltfaktor, ein dem Facies-Protokoll zugeordnetes Umweltfaktorprotokoll herzuleiten,
- Erstellen von Korrelationen zwischen jeweils zwei entsprechenden Facies-Protokollen aus den jedem Facies-Protokoll zugeordneten Umweltfaktorprotokollen, und
- Herleiten der einem gleichen Zeitintervall entsprechenden Teile der Facies-Protokolle aus den erstellten Korrelationen.

8. Das computerimplementierte Verfahren nach Anspruch 6 oder 7, wobei der Schritt des Bestimmens einer Anzahl von Schichten abgelagerter Sedimentelemente zum Modellieren jedes Facies-Protokolls ferner aufweist:

- Berechnen, für jedes Zeitintervall jedes Facies-Protokolls, einer Gesamtzeitdauer oder Gesamtdicke, die durch die Anzahl der zu simulierenden Lagen repräsentiert ist, um das dem Zeitintervall entsprechende Teil des Facies-Protokolls zu repräsentieren,
- Vergleichen der berechneten Gesamtzeitdauer oder der berechneten Gesamtdicke mit der Dicke des dem Zeitintervall entsprechenden Teils des Facies-Protokolls, und
- wenn die gesamte Zeitdauer oder Dicke jeweils das Zeitintervall oder die Dicke des dem Zeitintervall entsprechenden Teils des Facies-Protokolls überschreitet, Aktualisieren einer der durchschnittlichen Produktionsrate und der Zeitperiode, die einer Schicht von Sedimentelementen entspricht.

9. Computerprogrammprodukt, das Codeinstruktionen aufweist, um das Verfahren nach einem der vorangehenden Ansprüche zu implementieren, wenn es von einem Prozessor ausgeführt wird.

10. Nichtflüchtiges computerlesbares Speichermedium, auf dem ein Computerprogramm gespeichert ist, das Programminstruktionen aufweist, wobei das Computerprogramm in einen Prozessor ladbar und dazu ausgelegt ist, zu veranlassen, dass der Prozessor, wenn das Computerprogramm auf dem Prozessor läuft, das Verfahren nach einem der Ansprüche 1 bis 8 ausführt.

11. Vorrichtung zum Modellieren der Formation eines Sedimentbeckens, wobei die Vorrichtung einen Computer aufweist, der konfiguriert ist, um das Verfahren nach einem der Ansprüche 1 bis 8 zu implementieren.

**Revendications**

1. Procédé mis en oeuvre par ordinateur de définition de paramètres d'un programme de modélisation stratigraphique prévisionnelle pour modéliser la formation d'un bassin sédimentaire, dans lequel le programme de modélisation stratigraphique prévisionnelle est configuré pour simuler la superposition de couches successives de sédiments, chaque couche de sédiments correspondant à une période prédéterminée, le procédé comprenant les étapes de :

- réception (100) d'une diagraphie de faciès correspondant à un état initial d'au moins un puits appartenant au bassin sédimentaire, dans lequel la diagraphie de faciès comprend une succession de couches de différents faciès dans lequel chaque couche s'étend depuis une profondeur respective avec une épaisseur respective,
- détermination (300) à partir de la diagraphie de faciès d'un nombre de couches de sédiments et d'une épaisseur de chaque couche de sédiments à simuler par le programme de modélisation directe stratigraphique pour modéliser ladite diagraphie de faciès, comprenant :

- la détermination (310), à partir de la diagraphie de faciès, d'une vitesse de dépôt moyenne de chaque faciès de la diagraphie de faciès, exprimée en tant qu'épaisseur moyenne d'éléments sédimentaires déposés pendant la période correspondant à chaque couche de sédiments, et
- la détermination (320) d'un nombre de couches de sédiments à simuler par le programme de modélisation directe stratigraphique pour modéliser la diagraphie de faciès, à partir de la vitesse de dépôt moyenne des faciès, d'un nombre de faciès différents dans la diagraphie de faciès, et d'une épaisseur de chaque couche de faciès, et
- la détermination (340) d'une épaisseur de chaque couche de sédiments à partir du nombre de couches d'éléments sédimentaires déposés et à partir de l'épaisseur globale de la diagraphie de faciès.

2. Procédé mis en oeuvre par ordinateur selon la revendication 1, dans lequel la déduction d'une épaisseur (340) de chaque couche de sédiments comprend :

- le calcul d'une épaisseur moyenne des couches de sédiments en tant qu'épaisseur globale de la diagraphie de faciès divisée par le nombre de couches d'éléments sédimentaires déposés, et
- l'ajustement de l'épaisseur de chaque couche de sorte qu'une modification entre deux faciès successifs dans la diagraphie de faciès corresponde à une interface entre deux couches successives.

3. Procédé mis en oeuvre par ordinateur selon l'une quelconque des revendications 1 ou 2, chaque faciès correspond soit à un faciès transporté formé à partir d'éléments transportés, soit à un faciès produit localement formé au moins en partie à partir d'éléments produits localement,
dans lequel le nombre total de couches d'éléments sédimentaires à simuler est la somme d'un nombre de couches d'éléments sédimentaires à simuler afin de représenter les faciès produits localement et un nombre de couches d'éléments sédimentaires à simuler afin de représenter les faciès transportés.

4. Procédé mis en oeuvre par ordinateur selon la revendication 3, le nombre de couches à simuler afin de représenter les faciès produits localement de la diagraphie comprend :

- le calcul d'une épaisseur cumulée de tous les faciès produits localement de la diagraphie,
- la déduction, à partir de l'épaisseur cumulée et de la vitesse de dépôt moyenne des faciès par couche, d'un nombre de couches minimal pour représenter les faciès correspondant aux sédiments produits localement,
- la détermination d'un nombre de modifications de faciès produits localement au cours de la diagraphie,
- la détermination du nombre de couches à simuler afin de représenter les faciès produits localement en tant que valeur maximale entre le nombre de couches minimal et le nombre déterminé de modifications de faciès plus un.

5. Procédé mis en oeuvre par ordinateur selon l'une quelconque des revendications 3 ou 4, dans lequel le nombre de couches à simuler afin de représenter les faciès transportés de la diagraphie de faciès est défini en tant que le nombre de modifications de faciès transportés au cours de la diagraphie de faciès plus un.

6. Procédé mis en oeuvre par ordinateur selon l'une quelconque des revendications précédentes, comprenant la réception de diagraphies de faciès correspondant à au moins deux puits du bassin sédimentaire et l'identification de parties des diagraphies de faciès correspondant à un même intervalle de temps, et dans lequel l'étape de détermination d'un nombre de couches d'éléments sédimentaires déposés à simuler pour modéliser chaque diagraphie de faciès comprend la détermination d'un nombre de couches d'éléments sédimentaires déposés à simuler pour modéliser chaque partie d'une diagraphie de faciès correspondant à un intervalle de temps respectif.

7. Procédé mis en oeuvre par ordinateur selon la revendication 6, dans lequel l'identification de parties des diagraphies de faciès correspondant à un même intervalle de temps comprend :

- la détermination de conditions environnementales associées à au moins certains des faciès de chaque diagraphie de faciès, pour déduire, pour au moins un facteur environnemental, une diagraphie de facteurs environnementaux associée à la diagraphie de faciès,
- l'établissement de corrélations entre des faciès de diagraphies correspondant à deux puits respectivement, à partir des diagraphies de facteurs environnementaux associées à chaque diagraphie de faciès, et
- la déduction des parties des diagraphies de faciès correspondant à un même intervalle de temps à partir des corrélations établies.

**8.** Procédé mis en oeuvre par ordinateur selon la revendication 6 ou 7, dans lequel l'étape de détermination d'un nombre de couches d'éléments sédimentaires déposés pour modéliser chaque diagraphie de faciès comprend en outre :

- le calcul, pour chaque intervalle de temps de chaque diagraphie de faciès, d'une quantité totale de temps ou d'une épaisseur totale représentée par le nombre de couches à simuler afin de représenter la partie de la diagraphie de faciès correspondant à l'intervalle de temps,
- la comparaison de la quantité totale de temps calculée à l'intervalle de temps ou de l'épaisseur totale calculée à l'épaisseur de la partie de la diagraphie de faciès correspondant à l'intervalle de temps, et,
- si la quantité totale de temps ou l'épaisseur totale dépasse respectivement l'intervalle de temps ou l'épaisseur de la partie de la diagraphie de faciès correspondant à l'intervalle de temps, la mise à jour de l'une parmi la vitesse de production moyenne et la période correspondant à une couche d'éléments sédimentaires.

**9.** Produit programme informatique, comprenant des instructions en code pour mettre en oeuvre le procédé selon l'une quelconque des revendications précédentes, lorsqu'il est exécuté par un processeur.

**10.** Support de stockage non transitoire lisible par ordinateur, présentant stocké sur celui-ci un programme informatique comprenant des instructions de programme, le programme informatique étant téléchargeable dans un processeur et conçu pour amener le processeur à réaliser, lorsque le programme informatique est exécuté par le processeur, le procédé selon l'une quelconque des revendications 1 à 8.

**11.** Dispositif pour modéliser la formation d'un bassin sédimentaire, le dispositif comprenant un ordinateur configuré pour mettre en oeuvre le procédé selon l'une quelconque des revendications 1 à 8.

FIG. 1

FIG. 2

FL                    EL

FIG. 3

FL1 EL1              FL2 EL2              FL3 EL3

FIG. 4

| | D | FL1 | | | | FL2 | | | | Ntot |
|---|---|---|---|---|---|---|---|---|---|---|
| | | | ND | T | N | | ND | T | N | |
| IA | 15 | Fp | 2 | 100 | 10 | Fp | 8 | 50 | 8 | |
| | | Ft | 4 | 30 | 4 | Ft | 3 | 40 | 3 | |
| | | Tot | 6 | 130 | 14 | Tot | 11 | 90 | 11 | 15 |
| IB | 5 | Fp | 3 | 10 | 3 | Fp | 2 | 20 | 2 | |
| | | Ft | 1 | 60 | 1 | Ft | 8 | 200 | 8 | |
| | | Tot | 4 | 70 | 4 | Tot | 0 | 220 | 10 | 5 |
| Tot | 20 | | | | | | | | | 20 |

FIG. 5

FIG. 6

FIG. 7

FIG. 8

EP 3 966 600 B1

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6246963 B1, EDWARDS JONATHAN
- WO 2014023910 A